# FASCICULE DE BREVET EUROPEEN

(11) **EP 3 934 112 B1**
(45) Date de publication et mention de la délivrance du brevet: **10.05.2023**
(21) Numéro de dépôt: 21181353.0
(22) Date de dépôt: 24.06.2021
(51) Int. Cl.: H04B 3/54

(54) **PROCÉDÉ ET CHAINE DE RÉCEPTION POUR MODEM PLC**
EMPFANGSVERFAHREN UND -KETTE FÜR PLC-MODEM
RECEIVING METHOD AND CHANNEL FOR PLC MODEM.

(30) Priorité: 01.07.2020 FR 2006949
(43) Date de publication de la demande: 05.01.2022
(73) Titulaire: Sagemcom Energy & Telecom SAS, 92500 Rueil-Malmaison (FR)
(72) Inventeur: BAROIS, Jérôme, 92500 RUEIL MALMAISON (FR); BACRI, Guillaume, 92500 RUEIL MALMAISON (FR); BARTHES, Julien, 92500 RUEIL MALMAISON (FR); TERRIEN, Clément, 92500 RUEIL MALMAISON (FR)
(74) Mandataire: Cabinet Le Guen Maillet

(56) Documents cités:
- EP-A1- 3 104 569
- US-A1- 2012 134 395

## Description

### DOMAINE TECHNIQUE

Au moins un mode de réalisation de la présente invention concerne un dispositif noeud appartenant à un réseau utilisant des communications par courants porteurs en ligne. Au moins un mode de réalisation de la présente invention concerne une chaîne de réception dans un tel dispositif noeud, ainsi qu'un procédé de réception pour ce dispositif noeud.

### ETAT DE LA TECHNIQUE ANTERIEURE

Les communications par courants porteurs en ligne PLC (sigle signifiant « PowerLine Communications », en anglais) se développent, notamment dans le cadre des réseaux d'alimentation électrique de type AMM (sigle signifiant « Automated Meter Management », en anglais). Des réseaux de communication sont ainsi implémentés dans des réseaux d'alimentation électrique pour la collecte automatisée par un dispositif noeud de base (aussi appelé « concentrateur de données ») du réseau, auprès de compteurs électriques intelligents (« smart electricity meters » en anglais), de données de relevés de consommation énergétique que lesdits compteurs électriques intelligents sont respectivement en charge de surveiller.

La norme de communication G3-PLC est définie pour permettre aux différents dispositifs noeuds (notamment concentrateur de données et compteurs électriques intelligents) d'un tel réseau de communiquer entre eux. La norme est spécifiée dans la recommandation ITU-T G.9903 laquelle décrit notamment la couche physique (PHY) et la couche liaison de données (DLL, sigle de « Data Link Layer », en anglais) du modèle OSI (acronyme de « Open Systems Interconnection », en anglais). La norme G3-PLC est destinée à être exploitée dans des bandes fréquentielles allant de 10 à 490 kHz. Elle supporte plus particulièrement les bandes fréquentielles suivantes : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Ces différentes bandes fréquentielles présentent des caractéristiques différentes en termes de débit, de portée, et de résistance aux perturbateurs, notamment.

Toutefois, la norme G3-PLC ne permet l'utilisation que d'une seule desdites bandes fréquentielles pour un dispositif noeud donné. Plus exactement, les dispositifs noeuds récents peuvent parfois supporter plusieurs bandes fréquentielles, mais pas en même temps. Une reconfiguration est alors nécessaire pour passer d'une première bande fréquentielle à une seconde bande fréquentielle. Ainsi, lorsque dans un réseau de communication il est nécessaire de reconfigurer, dans une nouvelle bande fréquentielle, un ensemble de dispositifs concentrateurs de données et un ensemble de compteurs électriques qui lui sont associés, une reconfiguration peut se montrer particulièrement complexe. Par exemple, un dispositif compteur n'ayant pas pu réceptionner un message lui indiquant de changer de bande fréquentielle peut devenir incapable de communiquer avec le dispositif concentrateur de données auquel il est associé, après que ce dernier ait pu, quant à lui, changer de bande fréquentielle.

Or, les besoins en termes de ressources des réseaux de communication, notamment dans le déploiement des réseaux d'alimentation électrique de type AMM, grandissent de jour en jour. La bande fréquentielle pour laquelle les éléments constitutifs d'un réseau ont été certifiés peut se retrouver en limite de capacité, ce qui fait obstacle à une augmentation du nombre d'échanges dans le réseau, par exemple pour introduire de nouvelles fonctionnalités ou encore de nouveaux besoins applicatifs, par exemple.

Le document EP 3104569 A1 présente différents filtres adaptés à des bandes fréquentielles respectives distinctes pouvant être appliqués en réception d'une trame en fonction d'un schéma de modulation utilisé pour transmettre ladite trame. Cette technique est appliquée aux communications par courants porteurs en ligne où plusieurs schémas de modulation se distinguent par la bande fréquentielle utilisée et le nombre de sous-porteuses OFDM (signifiant « Orthogonal frequency-division multiplexing » en anglais) utilisées.

Le document US 2012/134395 A1 décrit des systèmes et des méthodes pour mettre en oeuvre des communications par courant porteur en ligne à travers différents domaines de tension en utilisant plusieurs sous-bandes de fréquence.

Il est souhaitable de pallier ces différents inconvénients de l'état de la technique. Il est ainsi notamment souhaitable de proposer une solution de communication par courant porteur en ligne permettant d'augmenter la capacité de nombre d'échanges dans le réseau de communication. Il est notamment souhaitable de proposer une solution applicable aux réseaux d'alimentation électrique de type AMM.

### EXPOSE DE L'INVENTION

La présente invention est définie par les revendications indépendantes ci-jointes. D'autres modes de réalisation préférés peuvent être trouvés dans les revendications dépendantes.

A cet effet, l'invention a pour objet un procédé de transmission dans un premier dispositif noeud d'un réseau de communication par courants porteurs en ligne (CPL), le premier dispositif noeud étant configuré pour appliquer un mode de réception de données émises par un second dispositif noeud dans une ou dans plusieurs, parallèlement, bandes fréquentielles disjointes, ou encore dans une bande fréquentielle dite « bande fréquentielle étendue » comprenant au moins deux bandes fréquentielles disjointes, le procédé étant tel que la réception dans la bande fréquentielle étendue se fait parallèlement dans les au moins deux bandes fréquentielles disjointes, et en ce qu'il comprend des étapes de :
- convertir les données reçues sous forme d'un signal analogique dans une ou plusieurs desdites bandes fréquentielles disjointes, en une première série de données,
- filtrer parallèlement ladite première série de données par autant de circuits de filtrage que de bandes fréquentielles pour lesquelles le premier dispositif noeud est configuré en réception, pour obtenir autant de secondes séries de données que de bandes fréquentielles pour lesquelles le premier dispositif noeud est configuré en réception,
- démoduler lesdites secondes séries de données par autant de circuits de démodulation que de bandes fréquentielles pour lesquelles le premier dispositif noeud est configuré en réception, pour obtenir des troisièmes séries de données,
- enregistrer les troisièmes séries de données dans une première mémoire tampon, et,
- désentrelacer des données, pour chacune des bandes fréquentielles disjointes, selon un mode de désentrelacement propre à la bande fréquentielle disjointe pour laquelle le désentrelacement est opéré, détecter si les données désentrelacées sont cohérentes, et, si les données désentrelacées sont cohérentes, fournir les données désentrelacées, en vue d'un traitement ultérieur.

Les termes « bande fréquentielle disjointe » désignent ici une bande fréquentielle disjointe d'une autre bande fréquentielle.

Un premier avantage du procédé décrit est qu'il est possible de recevoir des données transmises en bande fréquentielle étendue ou encore sur une ou plusieurs bandes fréquentielles disjointes en ne modifiant que de façon limitée l'architecture d'un dispositif noeud d'un réseau de communication par courants porteurs en ligne.

Il est ainsi possible d'exploiter, à partir de modifications restreintes de la couche physique d'un dispositif noeud existant, plusieurs bandes fréquentielles parallèlement tout en adressant des moyens matériels utilisés parallèlement (modulateurs à l'émission et démodulateurs à la réception) en faisant référence à une bande fréquentielle étendue, de façon similaire à ce qui est réalisé pour des communications dans une bande fréquentielle unique.

Les avantages découlant d'une utilisation simultanée de plusieurs bandes fréquentielles sont par exemple, une augmentation de la vitesse moyenne des transmissions entre deux noeuds voisins, et donc plus largement, à travers le réseau de communication, une répartition optimisée de la charge du réseau sur plusieurs bandes fréquentielles, et une meilleure communication en milieu perturbé.

Les avantages découlant d'un adressage d'une bande fréquentielle unique, c'est-à-dire de la bande étendue qui comprend plusieurs bandes fréquentielles disjointes, résident dans la simplification de la gestion des perturbations. Ainsi, il est possible de s'affranchir d'éventuelles perturbations temporelles (mise en route d'un équipement, par exemple) ou fréquentielles (présence de perturbations électromagnétiques à certaines fréquences uniquement).
Le procédé selon l'invention peut également comporter les caractéristiques suivantes, considérées seules ou en combinaison :
- Le premier dispositif noeud est configuré pour appliquer en outre un mode de réception de données émises par un second dispositif noeud dans une bande fréquentielle dite « bande fréquentielle étendue » comprenant au moins deux bandes fréquentielles disjointes, la réception dans la bande fréquentielle étendue se faisant parallèlement dans les au moins deux bandes fréquentielles disjointes, le procédé comprend en outre des étapes de désentrelacer des données lues dans la première mémoire tampon selon un mode de désentrelacement propre à une réception en bande fréquentielle étendue, détecter si les données désentrelacées sont cohérentes, et, si les données désentrelacées selon un mode de désentrelacement propre à la bande fréquentielle étendue sont cohérentes, fournir les données désentrelacées en vue d'un traitement ultérieur.
- L'étape pour détecter si les données sont cohérentes comprend une vérification d'éléments binaires de contrôle par le biais d'un circuit de correction directe d'erreurs dit « FEC ».
- L'étape pour détecter si les données sont cohérentes comprend une lecture d'un entête de contrôle de trame de données et une détermination d'une somme de contrôle de type CRC.
- Le traitement ultérieur est une lecture de trame de données de couche MAC formatées selon la recommandation ITU-T G9903 et la seconde mémoire tampon est une mémoire de réception de la sous-couche MAC de la couche de liaison du modèle réseau OSI.
- Les circuits de filtrage comprennent préférentiellement des filtres de second ordre opérant une séparation de données respectivement transmises dans des bandes fréquentielles disjointes parmi le groupe : bande fréquentielle CENELEC A, bande fréquentielle CENELEC B, et bande fréquentielle FCC ou bande fréquentielle ARIB.

Un autre objet de l'invention est de proposer un dispositif noeud dit « premier dispositif noeud » dans un réseau de communication par courants porteurs en ligne, le premier dispositif noeud étant configuré pour communiquer dans une ou plusieurs bandes fréquentielles disjointes avec un second dispositif noeud dudit réseau, le premier dispositif noeud étant caractérisé en ce qu'il est configuré en outre pour appliquer un mode de réception de données dans l'une ou dans plusieurs, parallèlement, desdites bandes fréquentielles disjointes, et en ce que le premier dispositif noeud comprend des circuits électroniques configurés pour :
- convertir les données reçues sous forme d'un signal analogique dans une ou plusieurs des bandes fréquentielles disjointes, en une première série de données,
- filtrer parallèlement la première série de données par autant de circuits de filtrage que de bandes fréquentielles pour lesquelles le premier dispositif noeud est configuré en réception, pour obtenir autant de secondes séries de données que de bandes fréquentielles pour lesquelles le premier dispositif noeud est configuré en réception,
- démoduler les secondes séries de données par autant de circuits de démodulation que de bandes fréquentielles pour lesquelles le premier dispositif noeud est configuré en réception, pour obtenir des troisièmes séries de données,
- enregistrer les troisièmes séries de données dans une première mémoire tampon, et,
- désentrelacer des données, pour chacune des bandes fréquentielles disjointes, selon un mode de désentrelacement propre à la bande fréquentielle disjointe pour laquelle le désentrelacement est opéré et, si les données désentrelacées sont cohérentes, fournir les données désentrelacées, en vue d'un traitement ultérieur.

Avantageusement, le dispositif noeud est configuré pour appliquer en outre un mode de réception de données émises par un second dispositif noeud dans une bande fréquentielle dite « bande fréquentielle étendue » comprenant au moins deux bandes fréquentielles disjointes, la réception dans la bande fréquentielle étendue se faisant parallèlement dans les au moins deux bandes fréquentielles disjointes, et le dispositif noeud comprend en outre des moyens pour :
- désentrelacer des données lues dans la première mémoire tampon selon un mode de désentrelacement propre à une réception en bande fréquentielle étendue et détecter si les données désentrelacées sont cohérentes, et,
- si les données désentrelacées selon un mode de désentrelacement propre à la bande fréquentielle étendue sont cohérentes, fournir les données désentrelacées en vue d'un traitement ultérieur.

L'invention a également pour objet un réseau de communication par courants porteurs en ligne comprenant une pluralité de dispositifs noeuds tel que précité.

L'invention concerne de plus un produit programme d'ordinateur comprenant des instructions de codes de programme pour exécuter les étapes du procédé précédemment décrit lorsque programme est exécuté par un processeur, ainsi qu'un support de stockage d'informations comprenant un produit programme d'ordinateur selon la revendication précédente.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre un réseau d'alimentation électrique utilisant des communications par courants porteurs en ligne ;
[Fig. 2] illustre un composant numérique de traitement dans un dispositif noeud du réseau déjà représenté sur la Fig. 1, selon un mode de réalisation ;
[Fig. 3] illustre une chaîne de réception de données dans un dispositif noeud d'un réseau de communication par courants porteurs en ligne, selon un mode de réalisation ;
[Fig. 4] illustre une table d'entrelacement T pour opérer un entrelacement de données, selon un mode de communication en bande fréquentielle étendue, opéré avant une émission de données par un dispositif noeud, selon un mode de réalisation ;
[Fig. 5] illustre une opération d'entrelacement agencée pour opérer un entrelacement de données, selon un mode de communication en bande fréquentielle étendue, opéré avant émission de données par un dispositif noeud, selon un mode de réalisation ;
[Fig. 6] illustre un traitement de données de la table d'entrelacement T de données représentée sur la Fig. 5 pour finaliser un entrelacement de données selon un mode de communication en bande fréquentielle étendue, opéré avant émission de données par un dispositif noeud, selon un mode de réalisation ;
[Fig. 7] illustre une décomposition de la table d'entrelacement T de données, représentée sur les Fig. 5 et Fig. 6, en secondes tables d'entrelacement T1 et T2 pour opérer une répartition de données entrelacées dans une pluralité de bandes fréquentielles ;
[Fig. 8] représente schématiquement l'architecture interne d'un dispositif noeud du réseau de la Fig. 1, selon un mode de réalisation ; et,
[Fig. 9] est un ordinogramme représentant des étapes d'un procédé de transmission de données dans un dispositif noeud, selon un mode de réalisation.

### EXPOSE DETAILLE DE MODES DE REALISATION

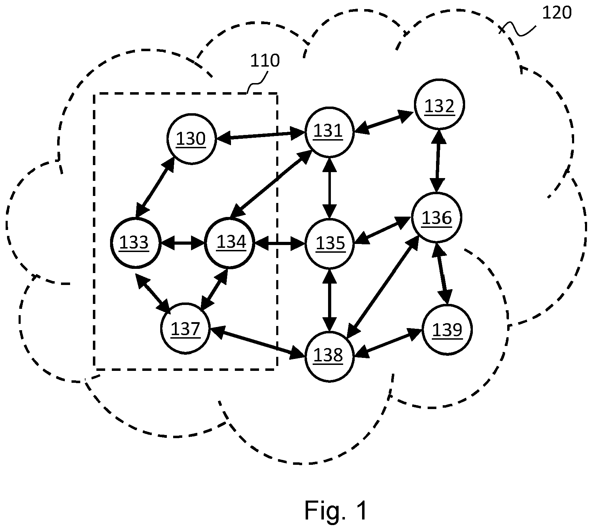

La **Fig. 1** illustre schématiquement un réseau de communication 120. Le réseau de communication 120 s'appuie sur des communications par courants porteurs en ligne PLC. Le réseau de communication 120 est par exemple un réseau d'alimentation électrique de type AMM permettant à un dispositif noeud de base (aussi appelé « concentrateur de données ») de collecter, auprès de compteurs électriques intelligents, des données de relevés de consommation énergétique d'installations électriques que lesdits compteurs électriques intelligents sont respectivement en charge de surveiller. Le concentrateur de données et les compteurs électriques intelligents sont ainsi des dispositifs noeuds du réseau de communication 120. Le réseau de communication 120 peut comporter d'autres dispositifs noeuds, par exemple installés au niveau de transformateurs électriques.

Le réseau de communication 120 a une structure maillée. La structure maillée du réseau de communication 120 est représentée schématiquement sur la Fig. 1 grâce à des flèches représentant les liens de communication entre deux noeuds voisins et où des dispositifs noeuds jouent le rôle de relais pour augmenter la portée des communications dans le réseau de communication 120. Un même compteur électrique intelligent dispose ainsi potentiellement de plusieurs routes pour atteindre le concentrateur de données, et vice versa.

La présente invention est donc particulièrement adaptée au contexte de la technologie G3-PLC.

Le réseau de communication 120 comporte ainsi une pluralité de dispositifs noeuds 130, 131, 132, 133, 134, 135, 136, 137, 138, 139. A chacun des dispositifs noeuds du réseau de communication 120 est associé un voisinage réseau. Par exemple, le dispositif noeud 133 de la Fig. 1 est associé à un voisinage réseau 110 englobant les dispositifs noeuds 130, 134 et 137. Dans le réseau de communication 120, un signal ou un message diffusé par un dispositif noeud, tel que, par exemple, le dispositif noeud 133, n'est généralement pas visible en tout point du réseau de communication 120. Chaque dispositif noeud émetteur de signaux ou de messages dispose alors d'un voisinage réseau, c'est-à-dire d'un sous-ensemble du réseau de communication 120 dans lequel tout dispositif noeud peut recevoir de manière intelligible les signaux ou messages directement en provenance du dispositif noeud ayant diffusé ces signaux ou messages. Le voisinage réseau correspond à la portée des signaux émis, en fonction de paramètres prédéterminés de transmission (e.g. puissance, schéma de modulation et de codage, topologie réseau...) du dispositif noeud à la source des signaux et aussi potentiellement en fonction de caractéristiques du canal de communication telles que, par exemple, une atténuation, un niveau de bruit, une impédance.

Le réseau de communication 120 s'appuie sur un protocole de routage de type réactif, tel que, par exemple, le protocole LOADng (« Lightweight On-demand Ad hoc Distance-vector Routing Protocol - Next Génération » en anglais). Contrairement aux protocoles de routage de type proactif qui s'appuient sur une connaissance globale de topologie réseau, les protocoles de routage de type réactif s'appuient sur des découvertes de routes à la demande, chaque dispositif noeud du réseau ayant alors besoin uniquement d'avoir connaissance de son propre voisinage réseau pour router des données dans le réseau de communication 120.

Pour découvrir une route appropriée dans le réseau de communication 120 depuis un dispositif noeud source (par exemple le dispositif noeud 133) jusqu'à un dispositif noeud destination (par exemple le dispositif noeud 132), il est connu que le dispositif noeud source diffuse (« broadcast » en anglais) une requête de découverte de route, appelée RREQ (« Route REQuest » en anglais). Cette requête de découverte de route est reçue par chaque dispositif noeud dans le voisinage réseau dudit dispositif noeud source. Chaque dispositif noeud dans le voisinage réseau dudit dispositif noeud source relaie, par diffusion, ladite requête si ledit dispositif noeud en question n'est pas le dispositif noeud destination. Par diffusion de proche en proche, plusieurs copies de la requête de découverte de route sont typiquement reçues par le dispositif noeud destination, chacune de ces copies ayant suivi un chemin différent dans le réseau de communication 120.

L'utilisation de tables de routage mémorisées dans les dispositifs noeuds permet d'effectuer des communications point-à-point (« unicast » en anglais) entre toute paire de dispositifs noeuds du réseau de communication 120. Des dispositifs noeuds intermédiaires servent donc de relais lorsque les dispositifs noeuds de ladite paire ne sont pas dans le voisinage réseau l'un de l'autre, les communications s'opèrent ainsi de proche en proche, chaque dispositif noeud s'appuyant sur un de ses propres voisins pour faire suivre des messages jusqu'à leurs destinataires respectifs.

Pour communiquer entre dispositifs noeuds voisins (c'est-à-dire des dispositifs noeuds qui sont dans le voisinage réseau l'un de l'autre), les messages sont transmis sous forme de trames modulées. Lorsqu'une trame modulée est spécifiquement adressée à un dispositif noeud voisin et qu'elle est correctement démodulée par celui-ci, ledit dispositif noeud voisin retransmet un acquittement ACK au dispositif noeud qui lui a adressé ladite trame modulée. L'acquittement ACK est transmis sur la même bande fréquentielle que la trame modulée à laquelle ledit acquittement ACK est associé.

Plusieurs bandes fréquentielles sont définies pour supporter la transmission de ces trames modulées, un schéma de modulation adapté étant associé avec chacune de ces bandes fréquentielles. Chaque trame transmise sous forme de signaux modulés débute par un préambule prédéfini en fonction du schéma de modulation selon lequel lesdits signaux ont été modulés. Le préambule est adapté pour permettre de se synchroniser en réception sur ladite trame, c'est-à-dire de pouvoir déterminer un instant effectif de début de trame. Pour ce faire, le préambule comporte typiquement une pluralité de copies successives d'un même symbole. Le contenu effectif et la durée du préambule sont ainsi prédéfinis et dépendent du schéma de modulation utilisé. Les préambules de plusieurs trames sont identiques lorsque le même schéma de modulation est appliqué, et diffèrent sinon.

Les schémas de modulation applicables (et des schémas de démodulation correspondants) sont préférentiellement des schémas de modulation (respectivement schémas de démodulation) multi-porteuse de type OFDM (« Orthogonal Frequency Division Multiplex » en anglais).

En termes de bandes fréquentielles utilisables dans le cadre de la mise en oeuvre du réseau de communication 120, on peut citer : la bande fréquentielle CENELEC A, qui va approximativement de 35 kHz à 91 kHz ; la bande fréquentielle FCC, qui va approximativement de 150 kHz à 480 kHz ; la bande fréquentielle ARIB, qui va approximativement de 150 kHz à 400 kHz ; et la bande fréquentielle CENELEC B, qui va approximativement de 98 kHz à 122 kHz. Il est alors possible d'utiliser : un premier schéma de modulation à trente-six porteuses dans la bande fréquentielle CENELEC A ; un second schéma de modulation à soixante-douze porteuses dans la bande fréquentielle FCC ; un troisième schéma de modulation à cinquante-quatre porteuses dans la bande fréquentielle ARIB ; et un quatrième schéma de modulation à seize porteuses dans la bande fréquentielle CENELEC B. Il apparaît de ce qui précède, qu'un dispositif noeud peut utiliser simultanément plusieurs bandes fréquentielles disjointes pour communiquer avec un ou plusieurs de ses voisins, en appliquant un mécanisme de transmission adapté. Toutefois, il apparaît que les bandes fréquentielles ARIB et FCC ne peuvent pas être utilisées simultanément par un même dispositif noeud, étant donné qu'elles se recouvrent.

Avantageusement, au moins certains des dispositifs noeuds 130, 131, 132, 133, 134, 135, 136, 137, 138, 139 sont configurés pour communiquer dans plusieurs bandes fréquentielles disjointes. Il est dès lors important, pour un dispositif noeud donné, de pouvoir déterminer quels sont les modes de communication supportés par un dispositif noeud dans son voisinage réseau. Les termes « modes de communications supportés » désignent un ou plusieurs modes de communication natifs d'un dispositif noeud, c'est-à-dire que ce dernier est capable d'implémenter du fait de ses configurations possibles, et impliquent aussi que ce ou ces modes de communication natifs soient utilisables à un instant donné, compte tenu des éventuelles perturbations qui peuvent exister. Les perturbations peuvent être issues, par exemple, d'un environnement bruité.

Un échange de messages selon un protocole prédéfini permet, par exemple, à un premier dispositif noeud d'obtenir des informations quant aux capacités de communication d'un second dispositif noeud voisin. Par exemple, le premier dispositif noeud adresse au second dispositif noeud voisin un exemplaire d'un premier message dans chacune des bandes fréquentielles dans lesquelles il peut communiquer du fait de sa configuration, et le dispositif noeud voisin est configuré pour reconnaître un tel message et y répondre par un second message dans chacune des bandes fréquentielles dans laquelle il a pu le recevoir.

Dans un contexte G3-PLC, par exemple, les exemplaires du premier message contiennent une information selon laquelle une estimation de canal est sollicitée auprès du dispositif noeud voisin, pour la bande fréquentielle dans laquelle il a reçu le message (requête dite « Tone Map »). Avantageusement, l'information selon laquelle une estimation canal est sollicitée auprès du second dispositif noeud voisin par le premier dispositif noeud est alors un indicateur *Tone Map Request* d'un entête de contrôle de trame défini selon la recommandation ITU-T G9903. Ainsi, le second dispositif noeud voisin répondra à la requête *Tone Map Request* en envoyant au premier dispositif noeud, dans chacune des bandes fréquentielles dans laquelle il a reçu un exemplaire du premier message, un second message comprenant des informations représentatives d'au moins une estimation de canal sous la forme d'un bloc de données *Tone Map Response* tel que défini selon la recommandation ITU-T G9903.

Le premier dispositif pourra donc connaître et mémoriser des informations quant aux bandes fréquentielles qu'il peut utiliser pour communiquer avec le second dispositif noeud voisin.

Selon un mode de réalisation de l'invention, au moins une partie des dispositifs noeuds 130, 131, 132, 133, 134, 135, 136, 137, 138, 139 supportant des modes de communication dans plusieurs bandes fréquentielles disjointes supporte en outre un mode de communication en bande fréquentielle dite « bande fréquentielle étendue ». Une bande fréquentielle étendue comprend avantageusement plusieurs bandes fréquentielles disjointes. Ainsi une bande fréquentielle étendue peut comprendre deux, trois ou quatre bandes fréquentielles disjointes, par exemple, ou plus encore. Chaque bande fréquentielle disjointe utilise une pluralité de sous porteuses.

La détermination de la capacité d'un dispositif noeud voisin à communiquer dans une bande fréquentielle étendue est similaire à ce qui est précédemment décrit pour la détermination des différents modes de communication supportés par un dispositif, dès lors que la bande fréquentielle étendue est communément définie entre les différents dispositifs noeuds voisins du réseau de communication. Ainsi, selon un mode de réalisation, la bande fréquentielle étendue peut être définie comme comprenant la bande fréquentielle CENELEC A, la bande fréquentielle CENELEC B et la bande FCC. Selon une variante, la bande fréquentielle étendue peut être définie comme comprenant la bande fréquentielle CENELEC A, la bande fréquentielle CENELEC B et la bande fréquentielle ARIB. Ces exemples ne sont pas limitatifs. Un premier dispositif noeud peut donc émettre une requête en estimation de canal (requête dite « TONE MAP ») dans la bande fréquentielle étendue pour déterminer si un second dispositif noeud voisin supporte des communications dans la bande fréquentielle étendue. Pour ce faire, un champ d'information d'un message qui comprend une requête en estimation de canal dans la bande étendue comprend en outre un indicateur selon lequel la requête est émise dans la bande étendue.

Avantageusement, lorsqu'un dispositif noeud, tel que, par exemple, le dispositif noeud 133 du réseau de communication 120, transmet des données à un dispositif noeud voisin, tel que le dispositif noeud 134, par exemple, en appliquant un mode de communication en bande fréquentielle étendue, une répartition des données sur l'ensemble des bandes fréquentielles astucieusement réalisée par l'entrelaceur, permet de minimiser les adaptations requises par rapport à l'architecture classique d'un dispositif noeud selon l'art antérieur.

Selon un mode de réalisation, un entrelacement des données à émettre en bande fréquentielle étendue est opéré selon un mode d'entrelacement propre au mode de communication en bande fréquentielle étendue, à partir d'un flux sériel de données disponibles en sortir d'un codeur Viterbi, et avant transmission de groupes de données à chacun des modulateurs utilisés, respectivement associés à chacune au moins des deux bandes fréquentielles disjointes qui composent conjointement la bande fréquentielle étendue.

Ainsi les données transmises en bande fréquentielle étendue sont réparties sur l'ensemble des sous-porteuses des bandes fréquentielles disjointes de la bande fréquentielle étendue, et un dispositif noeud doit pouvoir distinguer en réception si les données reçues ont été transmises sur l'une seulement des bandes fréquentielles disjointes (mono-bande), sur plusieurs bandes fréquentielles disjointes ne faisant pas référence à la bande fréquentielle étendue (multi-bande), ou encore sur la bande fréquentielle étendue comprenant au moins deux bandes fréquentielles disjointes vues conjointement comme formant une seule bande.

Avantageusement, le désentrelacement opéré en réception de façon symétrique à l'entrelacement réalisé à l'émission, permet d'identifier le mode de transmission des données, et ce, sans requérir de modifications importantes de l'architecture classique d'un dispositif noeud adapté aux communications par courants porteurs en ligne et de reconstruire les trames de données en vue d'un traitement ultérieur par la couche MAC.

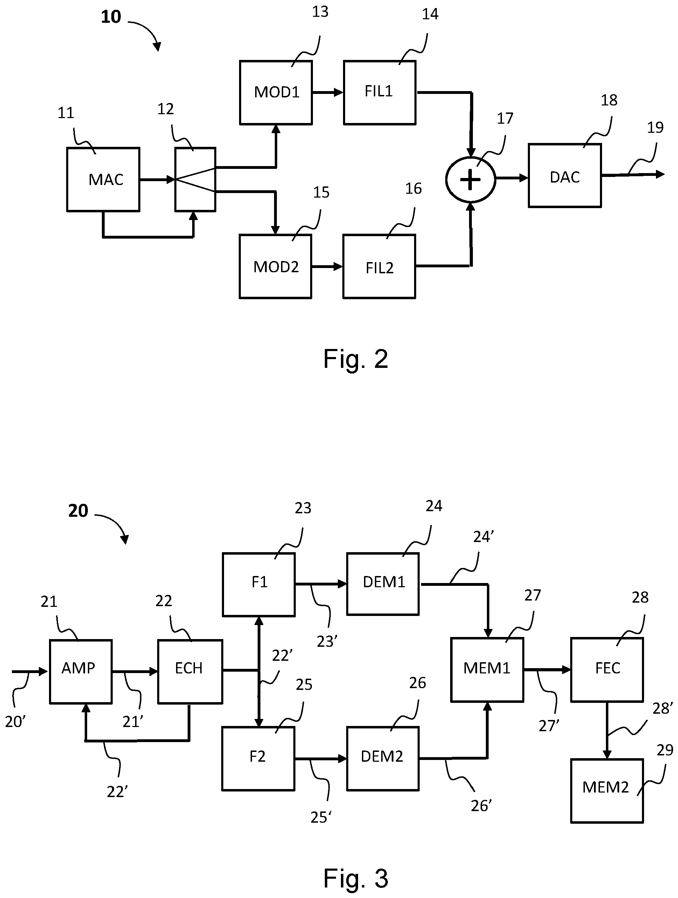

La Fig. 2 illustre un circuit de traitement numérique 10 d'un étage d'émission d'un dispositif noeud du réseau de communication 120, tel que, par exemple, le dispositif noeud 133. Un module MAC 11 regroupe l'ensemble des circuits de traitement qui implémentent la sous-couche de liaison MAC du modèle OSI. Selon l'exemple représenté, le circuit 10 comprend deux modulateurs MOD1 13 et MOD2 15 respectivement associés à deux bandes fréquentielles disjointes. Ainsi des données en provenance du module MAC 11 peuvent être orientées sur l'une ou l'autre des chaînes de traitement correspondant respectivement au modulateur MOD1 13 ou au modulateur MOD2 15, ou encore sur ces deux chaînes de traitement parallèlement. L'orientation des données vers l'un seulement des modulateurs MOD1 13 et MOD2 15 correspond à un mode de communication mono-bande. Une orientation des données en provenance du module MAC 11 vers les deux modulateurs parallèlement correspond à un mode de communication multi-bande ou un mode de communication en bande fréquentielle étendue. L'orientation des données en provenance du module MAC 11, c'est à dire en provenance de la sous-couche de liaison MAC du modèle OSI, est astucieusement réalisée par un module de commutation de données 12. Le module de commutation de données comprend un circuit d'entrelacement de données qui opère différemment selon le mode de communication appliqué par le dispositif noeud qui comprend le circuit de traitement numérique 10. Des filtres numériques FIL1 14 et FIL2 16 filtrent respectivement les données en sortie des modulateurs MOD1 13 et MOD 2 15 qui sont alors regroupées par un circuit additionneur 17 et appliquées à un convertisseur numérique-analogique DAC 18. Selon un mode de réalisation, le signal analogique délivré en sortie 19 du convertisseur numérique-analogique DAC 18 est alors amplifié par un amplificateur opérationnel puis appliqué à un filtre analogique commandable en fréquence. Le filtre analogique commandable en fréquence opère sous contrôle du module MAC 11. Enfin le signal filtré par le filtre analogique est appliqué à un étage de sortie qui opère une injection du signal PLC ainsi créé à partir notamment de données de la couche MAC, sur le secteur. L'amplificateur opérationnel, le filtre analogique et l'étage de sortie ne sont pas représentés sur la Fig. 2. Selon un mode de réalisation, la chaîne de traitement décrite à l'émission comprend une architecture classique hormis pour ce qui concerne le circuit d'entrelacement. Ainsi, la chaîne d'émission comprend un codeur de correction directe d'erreurs dit codeur « FEC » ou encore « FEC », et comprend en outre, pour chacune des chaînes de traitement correspondant respectivement au modulateur MOD1 13 et au modulateur MOD2 15, un circuit opérant une transformée de Fourier inverse. Le codeur FEC comprend un circuit d'embrouillage, un codeur Reed-Solomon, un codeur Viterbi, un circuit de duplication pour implémenter des modes de communication dits robustes, et un circuit d'entrelacement. Le circuit d'entrelacement constitue le dernier étage du codeur FEC et constitue en outre le module de commutation de données 12 représenté sur la Fig.2.

Selon un mode de réalisation de l'invention, le circuit d'entrelacement du codeur FEC, ou circuit de commutation de données 12, opère différemment selon le mode de communication appliqué par le dispositif noeud.

Astucieusement, pour un mode de communication en bande fréquentielle étendue, l'entrelacement des données est réalisé sur une première table d'entrelacement T qui comprend des secondes tables d'entrelacement T1 et T2 concaténées. Les secondes tables d'entrelacement T1 et T2 sont semblables à celles qui sont respectivement utilisées pour les opérations d'entrelacement des modes de communication mono-bande ou multi bande, avant modulation des données par les modulateurs MOD1 13 et MOD2 15. Les dimensions des tables d'entrelacement T1 et T2 sont donc définies respectivement selon les types de modulation mis en oeuvre par les modulateurs MOD1 13 et MOD2 15. Les types de modulation sont, par exemple, BPSK, QPSK et 8PSK. Chaque colonne d'une seconde table d'entrelacement T1 et T2 correspond à une sous-porteuse de la bande fréquentielle utilisée et chaque ligne correspond à un symbole dans la table d'entrelacement. Dans la première table d'entrelacement T utilisée pour un mode de communication en bande fréquentielle étendue, les secondes tables d'entrelacement T1 et T2 sont concaténées de sorte que celle qui comprend les sous-porteuses les plus basses est située à gauche et celle qui comprend les sous-porteuses les plus hautes est situées à droite, la première ligne de la première table d'entrelacement T correspondant aux premières lignes des secondes tables d'entrelacement T1 et T2. Lorsqu'un entrelacement des données est opéré selon un mode d'entrelacement propre au mode de communication en bande fréquentielle étendue, l'entrelacement est opéré sur la première table d'entrelacement T comprenant des éléments binaires en provenance du codeur Viterbi, et la répartition des données par bande fréquentielle est faite de sorte que chacune des secondes tables d'entrelacement voit son contenu adressé à l'un seulement des modulateurs MOD1 13 et MOD2 15. Plus précisément, les données comprises dans la seconde table d'entrelacement T1 sont adressées au modulateur MOD1 13 et les données comprises dans la seconde table d'entrelacement T2 sont adressées au modulateur MOD2 15, après entrelacement. Selon les disparités de dimensions des secondes tables d'entrelacement T1 et T2, leur concaténation telle que précédemment décrite peut conduire à des positions dites « invalides » dans la première table d'entrelacement concaténée. Les positions invalides sont celles qui sont comprises dans la première table d'entrelacement T mais qui sont non comprises dans l'une des secondes tables d'entrelacement T1 et T2. Les éléments binaires éventuellement présents à une position invalide après entrelacement des éléments binaires de la table d'entrelacement T sont déplacés vers des positions vacantes des secondes tables d'entrelacement T1 et T2, avant que les éléments binaires ne soient adressés aux modulateurs MOD1 13 et MOD2 15.

Lorsque le mode de communication appliqué par le dispositif noeud est mono-bande ou multi-bande hors bande fréquentielle étendue, l'entrelacement est fait classiquement par le biais d'une seconde table d'entrelacement T1 ou T2, pour chacune des chaînes de traitement correspondant respectivement au modulateur MOD1 13 et au modulateur MOD2 15.

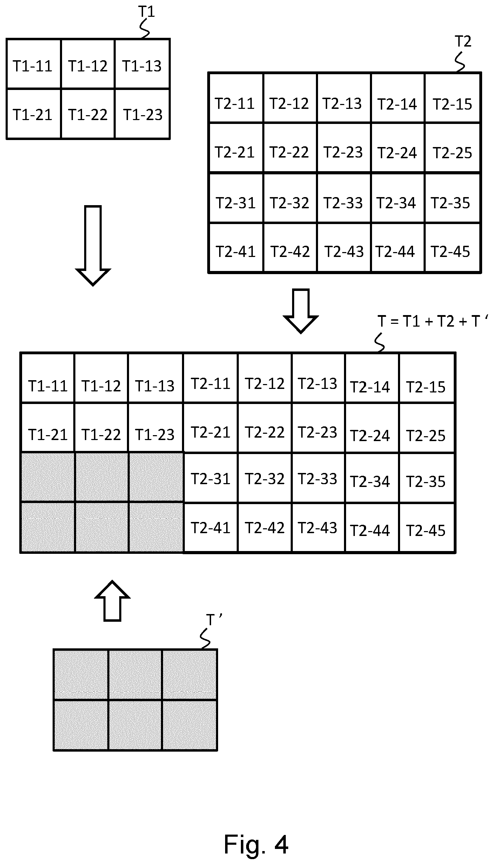

La **Fig. 4** illustre la concaténation des secondes tables d'entrelacement T1 et T2 qui sont utilisées pour l'entrelacement des données quand le mode de communication appliqué par le dispositif noeud est mono-bande ou multi-bande, en une première table d'entrelacement T, de dimensions plus grandes que les dimensions des secondes tables d'entrelacement T1 et T2. Si les dimensions respectives des secondes tables T1 et T2 sont différentes, dès lors que les types de modulation utilisés par les modulateurs MOD1 13 et MOD2 15 sont différents, alors des positions invalides apparaissent et qui sont représentés sous forme d'une quatrième table T', de sorte que T = T1 + T2 + T'.

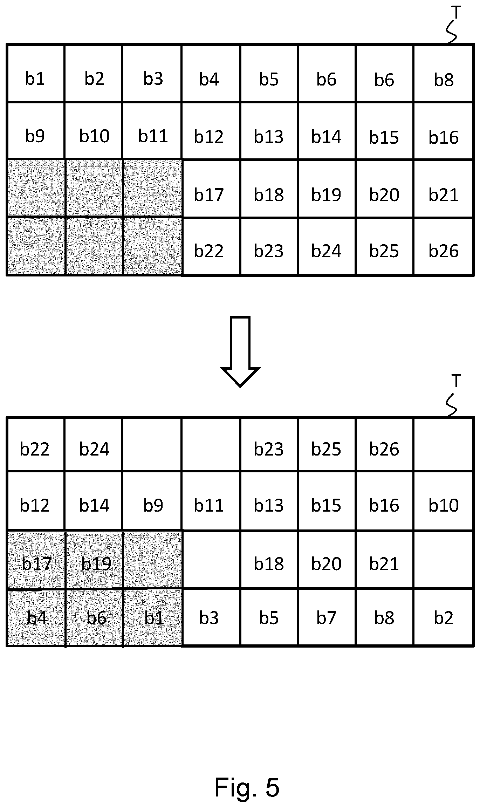

La **Fig. 5** illustre une opération d'entrelacement opérée dans la table T, pour un mode de communication en bande fréquentielle étendue, par permutations circulaires successives des lignes et des colonnes de la première table d'entrelacement T.

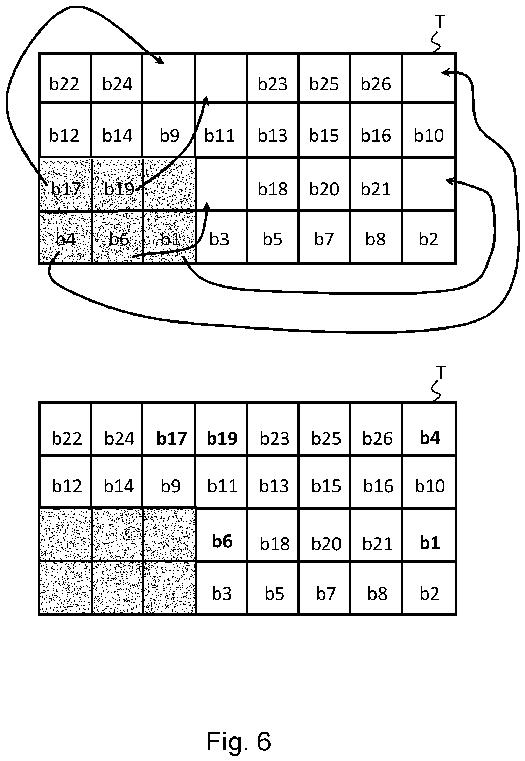

La **Fig. 6** illustre une opération de traitement de la première table d'entrelacement T visant à déplacer les éventuels éléments binaires présents dans des positions invalides de la première table d'entrelacement T avant d'orienter les contenus des secondes tables T1 et T2 respectivement vers les modulateurs MOD1 13 et MOD 2 15.

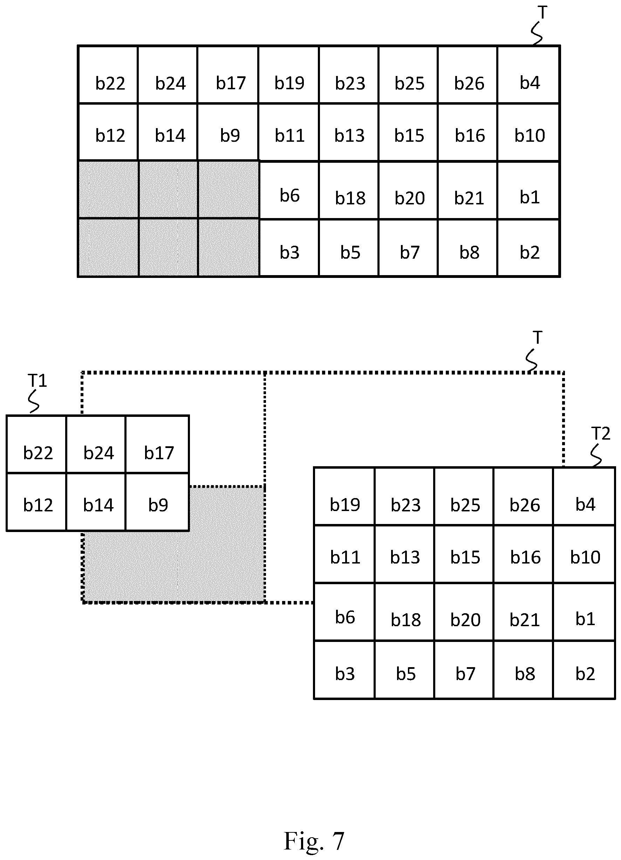

La **Fig. 7** illustre une décomposition de la première table d'entrelacement T en deux groupes de données correspondant aux deux secondes tables d'entrelacement T1 et T2 respectivement associées aux modulateurs MOD1 13 et MOD2 15.

Selon un mode de réalisation, les secondes tables d'entrelacement T1 et T2 sont définies conformément à la recommandation G3-PLC ITU-T G9903.

Ainsi, selon l'exemple décrit, le modulateur MOD1 13 opère une modulation de type BPSK et le modulateur MOD2 15 opère une modulation de type QPSK, de sorte que la seconde table d'entrelacement T1 comprend trois colonnes et deux lignes et la seconde table d'entrelacement T2 comprend cinq colonnes et quatre lignes, puisqu'en modulation BPSK, la bande fréquentielle disjointe comprend trois sous-porteuses et en modulation QPSK, la bande fréquentielle disjointe comprend cinq sous-porteuses.

Avantageusement, le désentrelacement, côté réception, est réalisé de façon inverse à l'entrelacement. Ainsi, un dispositif noeud opérant en réception peut définir sur quelle bande fréquentielle une transmission a été réalisée.

Pour ce faire, un dispositif noeud en réception peut procéder de plusieurs façons. Il peut par exemple commencer par désentrelacer les données reçues sur l'une ou l'autre des bandes fréquentielles disjointes, c'est-à-dire via un démodulateur parmi tous les démodulateurs utilisés, puis sur une autre des bandes fréquentielles disjointes, et ainsi de suite, selon le nombre de démodulateurs utilisés, et ensuite traiter les données reçues si celles-ci apparaissent cohérentes après désentrelacement. Le dispositif noeud peut également commencer, par exemple, par désentrelacer les données selon un mode de désentrelacement propre à la réception en bande étendue. Ainsi, plusieurs modes opératoires sont envisageables.

Dans l'exemple qui suit, le dispositif noeud opère d'abord un désentrelacement en bande fréquentielle étendue et en vérifie la cohérence des données ainsi obtenues. Si les données sont cohérentes lorsque le désentrelacement est réalisé selon le mode de désentrelacement propre au mode de communication appliqué en bande fréquentielle étendue, c'est-à-dire en utilisant la première table d'entrelacement T, les données ont été transmises dans la bande fréquentielle étendue. Sinon, si les données ne sont pas cohérentes, cela signifie qu'elles ont été transmises en appliquant un mode de communication mono-bande ou multi-bande ou que la communication en mode fréquentielle étendue est trop bruitée. Il convient alors d'opérer un désentrelacement à partir d'une ou plusieurs secondes tables de désentrelacement et de vérifier la cohérence des données obtenues de la sorte. Si lors de ces nouveaux tests de cohérences les données apparaissent cohérentes, alors il s'agit bien d'une transmission de données dans un mode de communication mono-bande ou multi-bande, selon que les données soient cohérentes en provenance de l'un seulement ou de plusieurs démodulateurs. Il se peut aussi que, lors d'une transmission en mode multi-bande, des données en provenance de l'un des démodulateurs soient cohérentes, et des données en provenance d'un autre démodulateur ne soient pas cohérentes parce que la communication dans la bande fréquentielle disjointe associée à ce dernier démodulateur est trop bruitée.

Avantageusement, il est possible de tester la cohérence des données en réception à partir d'indicateurs de taux d'erreur binaires en réception, lesquels indicateurs sont lus à partir d'un circuit de décodage Reed-Solomon et classiquement appelés BER (acronyme de l'anglais « Bit Error Rate »).

Avantageusement encore il est possible de tester la cohérence des données par détermination d'une somme de contrôle de type CRC appliquée à un entête de trame de contrôle de la couche MAC regroupant des données en réception. La trame de contrôle étant reconstruite par l' ensemble des circuits du dispositif noeud implémentant la couche physique.

Ces mécanismes de détermination du mode de transmission de données, appliqués par un dispositif noeud ayant émis des données, sont possibles grâce à l'utilisation astucieuse d'une première mémoire tampon dans laquelle les données en réception sont agencées dans une première table de désentrelacement TD et des secondes tables de désentrelacement TD1 et TD2 avant d'opérer un désentrelacement en procédant de façon strictement inverse (ou symétrique) par rapport aux opérations d'entrelacement précédemment décrites.

Les tables de désentrelacement TD, TD1 et TD2 présentent des dimensions respectivement égales aux tables d'entrelacement T, T1 et T2 déjà décrites dans la mesure où les traitements opérés pour le désentrelacement des données correspondent à un traitement strictement inverse de ce qui est opéré pour leur entrelacement.

La **Fig.3** illustre une chaîne de traitement en réception 20 d'un dispositif noeud, tel que le dispositif noeud 133 du réseau de communication 120, configuré pour opérer dans un réseau de communication par courants porteurs en lignes et configuré pour recevoir des données selon un mode de communication mono-bande, multi-bande, ou en bande fréquentielle étendue. La chaîne de traitement en réception 20 comprend deux démodulateurs et peut donc traiter une réception en mono-bande, en multi-bande ou en bande fréquentielle étendue ; la bande fréquentielle étendue comprenant alors, selon l'exemple décrit, deux bandes fréquentielles disjointes. La chaîne de traitement 20 comprend une entrée 20' et un étage de gain programmable AMP 21 configuré pour supporter toute la dynamique d'entrée des multiples bandes fréquentielles et éviter la saturation éventuelle des signaux de l'une des bandes fréquentielles disjointes. Par exemple, un mode de réglage possible est de choisir l'atténuation la plus élevée entre celle requise pour la bande la plus basse et celle requise pour la bande la plus haute. Un étage de conversion analogique-numérique ECH 22 opère la conversion et contrôle le gain, via un lien 22', de l'étage de gain programmable AMP 21. L'étage de gain programmable AMP21 est connecté à l'étage de conversion ECH22 via un lien 21'. L'étage de conversion ECH 22 est mutualisé et la fréquence d'échantillonnage est définie par rapport à la fréquence d'échantillonnage requise dans la bande fréquentielle disjointe présentant la fréquence la plus élevée. Ainsi, si les bandes fréquentielles sont celles définies par la recommandation ITU-T G.9903, la fréquence d'échantillonnage *Fs* de l'étage de conversion ECH 22 doit être supérieure ou égale à 1,2 Mhz (selon le tableau B.4 de la recommandation ITU-T G.9901 version 2017).

Selon un mode de réalisation, la séparation des données transmises dans les différentes bandes fréquentielles, pour lesquelles le dispositif noeud qui comprend la chaîne de traitement en réception 20 est configuré en réception, est ensuite réalisée avec des filtres numériques F1 23 et F2 25. Les bandes fréquentielles étant disjointes, leurs signaux respectifs peuvent être distingués aisément de la sorte.

Selon un exemple, la modulation correspondante à la bande disjointe « basse », par exemple CENELEC-A utilise des fréquences entre une fréquence minimale *Fbmin* et une fréquence maximale *Fbmax.* Le filtre numérique F1 utilisé est alors un filtre numérique passe-bande dont les fréquences de coupure sont *Fbmin* et *Fbmax* ou un filtre numérique passe-bas dont la fréquence de coupure est *Fbmax.* Ainsi le filtre numérique peut être un filtre de Buttersworth caractérisé par un ordre 2, une atténuation dans la bande de 1dB et une fréquence de coupure à 120 kHz.

Toujours selon l'exemple d'utilisation, la modulation correspondante à la bande disjointe « haute », par exemple la bande fréquentielle FCC, utilise des fréquences entre une fréquence minimale *Fhmin* et une fréquence maximale *Fhmax.* Le filtre numérique F2 utilisé est alors un filtre numérique passe-bande dont les fréquences de coupure sont *Fhmin* et *Fhmax* ou un filtre numérique passe-haut dont la fréquence de coupure est *Fhmin.* Ainsi le filtre numérique peut être un filtre de Buttersworth caractérisé par un ordre 2, une atténuation dans la bande de 1dB et une fréquence de coupure à 140 kHz. Les filtres numériques F1 et F2 sont préférentiellement des filtres de second ordre. Selon des variantes, les filtres présentent des caractéristiques d'un ordre supérieur.

Les données en sortie de chacun des filtres numériques F1 et F2 sont alors respectivement transmises aux démodulateurs DEM1 24 et DEM2 26 via des liens 23' et 25'. Astucieusement, la sortie des démodulateurs DEM1 24 et DEM 2 26 est traitée par un décodeur FEC 28, par l'intermédiaire d'une première mémoire MEM 1 27 dite mémoire de désentrelacement. Les données en provenance des démodulateurs sont chargées dans la première mémoire de désentrelacement MEM1 27 via des liens 24' et 26'. Les données sont chargées selon un agencement prédéfini de sorte à pouvoir les désentrelacer selon plusieurs modes de désentrelacement. L'agencement correspond à une écriture des données dans les tables de désentrelacement TD, TD1 et TD2. Un circuit de désentrelacement du décodeur FEC 28 lit les données dans la première mémoire de désentrelacement MEM1 27 et est configuré pour vérifier si les données désentrelacées apparaissent cohérentes. Dans le cas où les données désentrelacées apparaissent cohérentes, elles sont enregistrées dans une seconde mémoire MEM 2 29, dite mémoire de réception de la sous-couche de liaison MAC, via un lien 28'. Les données ainsi stockées dans la mémoire de réception MEM2 29 constituent des trames de données prêtes à être traitées par la couche MAC du modèle ISO. Quand des données sont disponibles dans la première mémoire de désentrelacement MEM1 27, une première opération de désentrelacement est réalisée par le biais de la première table de désentrelacement TD. La cohérence des données désentrelacées selon ce mode de désentrelacement propre à une transmission en bande fréquentielle étendue est alors vérifiée. Si les données ne sont pas cohérentes, cela signifie qu'un autre mode de transmission a été utilisé pour la transmission des données et une seconde opération de désentrelacement, par le biais de chacune des secondes tables de désentrelacement TD1 et TD2 est opérée.

Dans l'exemple décrit ci-avant, le dispositif noeud comprenant la chaîne 20 de traitement en réception comprend deux démodulateurs DEM 1 24 et DEM2 26. Cette architecture n'est pas limitative, et un dispositif noeud peut comprendre, par exemple, trois démodulateurs ou plus, en fonction du nombre de bandes fréquentielles dans lesquelles il doit pouvoir opérer une réception de données.

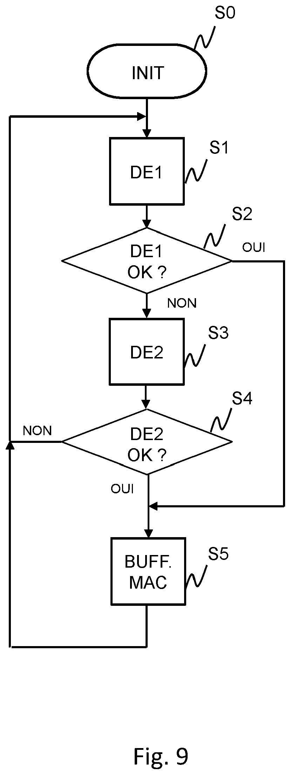

L'ordinogramme de la **Fig.9** illustre cette méthode de reconstruction des trames de données au format MAC selon un mode de réalisation, pour le dispositif noeud 133 du réseau de communication 120. Au terme d'une étape d'initialisation S0, toutes les configurations des circuits internes du dispositif noeud 133, aboutissant à une réception de données émises par un dispositif noeud voisin, par exemple depuis le dispositif noeud 134, ont été réalisées. Ainsi l'étage d'amplification AMP 21 est programmé avec un gain initial, les filtres numériques F1 23 et F2 25 sont calibrés et les démodulateurs DEM1 24 et DEM2 26 sont configurés sous contrôle d'une unité de contrôle du dispositif noeud 133. Selon l'exemple choisi, le démodulateur DEM 1 24 est configuré pour opérer une démodulation BPSK de données transmises dans la bande fréquentielle CENELEC-A et le démodulateur DEM2 26 est configuré pour opérer une démodulation QPSK de données transmises dans la bande fréquentielle FCC. Les données reçues en sortie de chacun des démodulateurs DEM1 24 et DEM 26 sont respectivement chargées dans des secondes tables de désentrelacement TD1 et TD2, et donc de fait, dans une première table de désentrelacement TD comprenant les secondes tables de désentrelacement TD1 et TD2 et dont les dimensions, en termes de nombre de lignes et de colonnes sont donc définies en fonction des types de modulation (et donc de démodulation) utilisés. Le circuit de désentrelacement du décodeur FEC 28 opère alors un désentrelacement selon un premier mode de désentrelacement DE1 propre à une transmission de données en bande fréquentielle étendue lors d'une étape S1. Les données désentrelacées sont traitées par le décodeur FEC 28 et la cohérence des données est vérifiée lors d'une étape S2. Ainsi, si la trame de données MAC reconstruite qui en résulte est cohérente, c'est-à-dire si par exemple une lecture de l'ensemble des champs d'un entête de contrôle de la trame de données permet de calculer une somme de contrôle CRC égale à celle lue dans le champ CRC de l'entête de contrôle de la trame, alors les données sont considérées comme étant cohérentes. Selon un mode de réalisation, dans le cas contraire, une lecture d'un indicateur BER de taux d'erreur du circuit Reed Solomon du décodeur FEC 28 peut permettre de confirmer que la qualité de la transmission des données n'est pas de nature à permettre la réception de données cohérentes. Si les données reçues reconstituées au format MAC apparaissent cohérentes, elles sont enregistrées dans une seconde mémoire tampon MEM2 29 dite buffer de réception de la couche MAC à une étape S5. Dans le cas où les données n'apparaissent pas cohérentes lors de l'étape S2 dans laquelle le désentrelacement est opéré selon un premier mode de désentrelacement DE1, alors un désentrelacement est opéré lors d'une étape S3 selon un second mode de désentrelacement DE2, par le biais des secondes tables de désentrelacement TD1 et TD2. Un désentrelacement selon ce second mode DE2 comprend un désentrelacement des données précédemment chargées dans la seconde table de désentrelacement TD1 parallèlement à un désentrelacement des données précédemment chargées dans la seconde table de désentrelacement TD2. De façon similaire au contrôle de cohérence de données opéré à l'étape S2, la cohérence des données ainsi désentrelacées à l'étape S3 est vérifiée lors d'une étape S4. La cohérence des données est vérifiée d'une part pour les données désentrelacées par le biais de la seconde table de désentrelacement TD1, et d'autre part pour les données désentrelacées par le biais de la seconde table de désentrelacement TD2. Si les données désentrelacées en provenance des deux secondes tables de désentrelacement TD1 et TD2 sont cohérentes, alors la transmission des données est réalisée en multi-bande, puisque des données cohérentes sont reçues via les deux démodulateurs DEM1 24 et DEM2 26 et que la transmission n'est pas réalisée en bande fréquentielle étendue. Lorsque les données désentrelacées à l'étape S4 sont cohérentes, elles sont enregistrées dans la seconde mémoire tampon MEM2 29 dite buffer de réception de la couche MAC, à l'étape S5, en vue d'être traitée par la sous-couche de liaison MAC du modèle OSI.

Dans le cas où des données désentrelacées apparaissent cohérentes pour un désentrelacement opéré par le biais de l'une des secondes tables de désentrelacement TD1 et TD2, mais pas pour l'autre, cela signifie que la transmission est opérée en mono-bande ou encore que l'une des deux bandes fréquentielles utilisées pour la transmission est fortement bruitée. Là encore, des indications en provenance d'un indicateur BER de taux d'erreur du décodeur FEC 28 peuvent permettre de constater un problème de qualité du lien en réception, ou une absence de lien établie avec un émetteur.

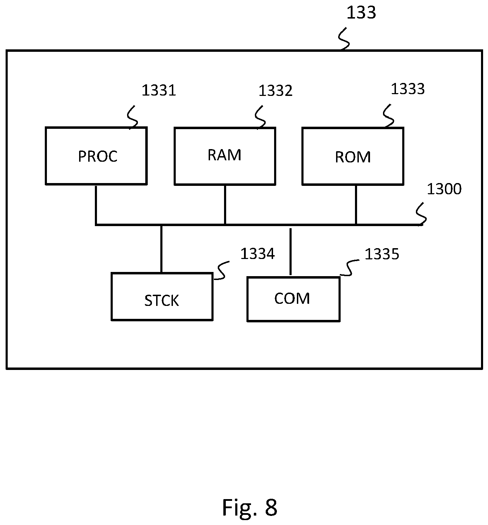

La **Fig. 8** illustre schématiquement un exemple d'architecture interne de tout dispositif noeud du réseau de communication 120. Considérons à titre illustratif que la Fig. 8 illustre un agencement interne du dispositif noeud 133. Un tel dispositif noeud est qualifié de multi-bande car capable de transmettre un message sur plusieurs bandes fréquentielles (émission et réception). On note que la Fig. 8 pourrait aussi illustrer schématiquement un exemple d'architecture matérielle d'un module de traitement compris dans le premier dispositif noeud 133, tel qu'une circuiterie d'entrelacement ou de désentrelacement (encore appelée entrelaceur ou désentrelaceur).

Selon l'exemple d'architecture matérielle représenté à la Fig. 8, le premier dispositif noeud 133 comprend alors, reliés par un bus de communication 1300 : un processeur ou CPU (« Central Processing Unit » en anglais) 1331 ; une mémoire vive RAM (« Random Access Memory » en anglais) 1332 ; une mémoire morte ROM (« Read Only Memory » en anglais) 1333 ; une unité de stockage telle qu'un disque dur (ou un lecteur de support de stockage, tel qu'un lecteur de cartes SD (« Secure Digital » en anglais) 1334 ; au moins une interface de communication 1335 permettant au premier dispositif noeud 133 de communiquer avec les dispositifs noeuds appartenant à son voisinage réseau, tels que par exemple, les dispositifs noeuds 134 et 137.

Le processeur 1301 est capable d'exécuter des instructions chargées dans la RAM 1332 à partir de la ROM 1333, d'une mémoire externe (non représentée), d'un support de stockage (tel qu'une carte SD), ou d'un réseau de communication. Lorsque le premier dispositif noeud 133 est mis sous tension, le processeur 1331 est capable de lire de la RAM 1332 des instructions et de les exécuter. Ces instructions forment un programme d'ordinateur causant la mise en oeuvre, par le processeur 1331, de tout ou partie du procédé décrit en relation avec les Figs. 4 à 7 et 9.

Tout ou partie du procédé décrit en relation avec les Figs. 4 à 7 et 9 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif noeud 133 comprend de la circuiterie électronique configurée pour mettre en oeuvre les procédés décrits en relation avec le dispositif noeud 133. Bien évidemment le dispositif noeud 133 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus. Cette liste étant non exhaustive.

## Revendications

1. Procédé de transmission dans un premier dispositif noeud (133) d'un réseau de communication (120) par courants porteurs en ligne, le premier dispositif noeud (133) étant configuré pour appliquer un mode de réception de données émises par un second dispositif noeud (134) dans une ou dans plusieurs, parallèlement, bandes fréquentielles disjointes, comprenant des étapes de :
- convertir des données reçues sous forme d'un signal analogique dans une ou plusieurs desdites bandes fréquentielles disjointes, en une première série de données,
- filtrer parallèlement ladite première série de données par autant de circuits de filtrage que de bandes fréquentielles pour lesquelles le premier dispositif noeud est configuré en réception, pour obtenir autant de secondes séries de données que de bandes fréquentielles pour lesquelles le premier dispositif noeud (133) est configuré en réception,
- démoduler lesdites secondes séries de données par autant de circuits de démodulation que de bandes fréquentielles pour lesquelles le premier dispositif noeud (133) est configuré en réception, pour obtenir des troisièmes séries de données, et,
- enregistrer les troisièmes séries de données dans une première mémoire tampon (MEM1 27),
le procédé étant **caractérisé en ce qu'**il comprend en outre des étapes de :
- désentrelacer (S3) des données, pour chacune des bandes fréquentielles disjointes, selon un mode de désentrelacement (DE2) propre à la bande fréquentielle disjointe pour laquelle le désentrelacement est opéré, détecter si les données désentrelacées sont cohérentes, et, si les données désentrelacées sont cohérentes (S4), fournir (S5) les données désentrelacées, en vue d'un traitement ultérieur.

2. Procédé de transmission selon la revendication précédente, dans lequel le premier dispositif noeud (133) est configuré pour appliquer en outre un mode de réception de données émises par un second dispositif noeud (134) dans une bande fréquentielle dite « bande fréquentielle étendue » comprenant au moins deux bandes fréquentielles disjointes, la réception dans ladite bande fréquentielle étendue se faisant parallèlement dans les au moins deux bandes fréquentielles disjointes, le procédé comprenant en outre des étapes de désentrelacer (S 1) des données lues dans ladite première mémoire tampon (MEM1 27) selon un mode de désentrelacement (DE1) propre à une réception en bande fréquentielle étendue, détecter (S2) si les données désentrelacées sont cohérentes, et, si les données désentrelacées selon un mode de désentrelacement (DE1) propre à la bande fréquentielle étendue sont cohérentes, fournir (S5) les données désentrelacées en vue d'un traitement ultérieur.

3. Procédé de transmission selon la revendication 1 ou 2, dans lequel l'étape pour détecter si les données sont cohérentes comprend une vérification d'éléments binaires de contrôle par le biais d'un circuit de correction directe d'erreurs dit « décodeur FEC ».

4. Procédé de transmission selon la revendication 1 ou 2, dans lequel l'étape pour détecter si les données sont cohérentes comprend une lecture d'un entête de contrôle de trame de données et une détermination d'une somme de contrôle de type CRC.

5. Procédé de transmission selon l'une des revendications précédentes dans lequel le traitement ultérieur est une lecture de trame de données de couche MAC formatées selon la recommandation ITU-T G9903.

6. Procédé selon l'une quelconque des revendications précédentes, dans lequel les circuits de filtrage comprennent des filtres (F1, F2), préférentiellement de second ordre, opérant une séparation de données respectivement transmises dans des bandes fréquentielles disjointes parmi le groupe : bande fréquentielle CENELEC A, bande fréquentielle CENELEC B, et bande fréquentielle FCC ou bande fréquentielle ARIB.

7. Dispositif noeud (133) dit « premier dispositif noeud » dans un réseau de communication (120) par courants porteurs en ligne, le premier dispositif noeud (133) étant configuré pour communiquer dans une ou plusieurs bandes fréquentielles disjointes avec un second dispositif noeud (134) dudit réseau (120), le premier dispositif noeud (133) étant configuré en outre pour appliquer un mode de réception de données dans l'une ou dans plusieurs, parallèlement, desdites bandes fréquentielles disjointes, e le premier dispositif noeud comprenant des circuits électroniques configurés pour :
- convertir les données reçues sous forme d'un signal analogique dans une ou plusieurs desdites bandes fréquentielles disjointes, en une première série de données,
- filtrer parallèlement ladite première série de données par autant de circuits de filtrage que de bandes fréquentielles pour lesquelles le premier dispositif noeud est configuré en réception, pour obtenir autant de secondes séries de données que de bandes fréquentielles pour lesquelles le premier dispositif noeud (133) est configuré en réception,
- démoduler lesdites secondes séries de données par autant de circuits de démodulation que de bandes fréquentielles pour lesquelles le premier dispositif noeud (133) est configuré en réception, pour obtenir des troisièmes séries de données,
- enregistrer les troisièmes séries de données dans une première mémoire tampon (MEM1 27), et,
le premier dispositif noeud (133) étant **caractérisé en ce qu'**il comprend des circuits électroniques configurés pour :
- désentrelacer (S3) des données, pour chacune des bandes fréquentielles disjointes, selon un mode de désentrelacement (DE2) propre à la bande fréquentielle disjointe pour laquelle le désentrelacement est opéré et, si les données désentrelacées sont cohérentes (S4), fournir (S5) les données désentrelacées, en vue d'un traitement ultérieur.

8. Dispositif noeud selon la revendication précédente, configuré pour opérer un mode de réception de données dans une bande fréquentielle dite « bande fréquentielle étendue » comprenant au moins deux bandes fréquentielles parmi ladite pluralité de bandes fréquentielles disjointes, la réception dans ladite bande fréquentielle étendue se faisant parallèlement dans les au moins deux bandes fréquentielles disjointes, comprenant en outre des circuits électroniques configurés pour :
- désentrelacer (S 1) des données lues dans ladite première mémoire tampon (MEM1 27) selon un mode de désentrelacement (DE1) propre à une réception en bande fréquentielle étendue et détecter (S2) si les données désentrelacées sont cohérentes, et,
- si les données désentrelacées selon un mode de désentrelacement (DE1) propre à la bande fréquentielle étendue sont cohérentes, fournir (S5) les données désentrelacées en vue d'un traitement ultérieur.

9. Réseau de communication (120) par courants porteurs en ligne comprenant une pluralité de dispositifs noeuds (130, 131, 132, 133, 134, 135, 136, 137, 138, 139) selon la revendication précédente.

10. Produit programme d'ordinateur **caractérisé en ce qu'**il comprend des instructions de codes de programme pour exécuter les étapes du procédé selon l'une quelconque des revendications 1 à 6, lorsque ledit programme est exécuté par un processeur.

11. Support de stockage d'informations comprenant un produit programme d'ordinateur selon la revendication précédente.

## Patentansprüche

1. Übertragungsverfahren in einer ersten Knotenvorrichtung (133) eines Powerline-Kommunikationsnetzes (120), wobei die erste Knotenvorrichtung (133) konfiguriert ist, einen Empfangsmodus von Daten anzuwenden, die von einer zweiten Knotenvorrichtung (134) parallel in einem oder mehreren getrennten Frequenzbändern gesendet werden, das Schritte enthält:
- des Umwandelns von in Form eines analogen Signals in einem oder mehreren der getrennten Frequenzbändern empfangenen Daten in eine erste Reihe von Daten,
- des parallelen Filterns der ersten Reihe von Daten durch ebenso viele Filterschaltungen wie Frequenzbänder, für die die erste Knotenvorrichtung empfangsseitig konfiguriert ist, um ebenso viele zweite Reihen von Daten wie Frequenzbänder zu erhalten, für die die erste Knotenvorrichtung (133) empfangsseitig konfiguriert ist,
- des Demodulierens der zweiten Reihen von Daten durch ebenso viele Demodulationsschaltungen wie Frequenzbänder, für die die erste Knotenvorrichtung (133) empfangsseitig konfiguriert ist, um dritte Reihen von Daten zu erhalten, und
- des Speicherns der dritten Reihen von Daten in einem ersten Pufferspeicher (MEM1 27),
wobei das Verfahren **dadurch gekennzeichnet ist, dass** es außerdem Schritte enthält:
- des Entschachtelns (S3) der Daten für jedes der getrennten Frequenzbänder gemäß einem Entschachtelungsmodus (DE2), der dem getrennten Frequenzband eigen ist, für das die Entschachtelung durchgeführt wird, des Erkennens, ob die entschachtelten Daten kohärent sind, und, wenn die entschachtelten Daten kohärent sind (S4), des Lieferns (S5) der entschachtelten Daten für eine spätere Verarbeitung.

2. Übertragungsverfahren nach dem vorhergehenden Anspruch, wobei die erste Knotenvorrichtung (133) konfiguriert ist, um außerdem einen Empfangsmodus von von einer zweiten Knotenvorrichtung (134) in einem "erweitertes Frequenzband" genannten Frequenzband gesendeten Daten anzuwenden, das mindestens zwei getrennte Frequenzbänder enthält, wobei der Empfang im erweiterten Frequenzband parallel in den mindestens zwei getrennten Frequenzbändern erfolgt, wobei das Verfahren außerdem Schritte der Entschachtelung (S1) von im ersten Pufferspeicher (MEM1 27) gelesenen Daten gemäß einem einem Empfang im erweiterten Frequenzband eigenen Entschachtelungsmodus (DE1), der Erkennung (S2), ob die entschachtelten Daten kohärent sind, und, wenn die gemäß einem dem erweiterten Frequenzband eigenen Entschachtelungsmodus (DE1) entschachtelten Daten kohärent sind, des Lieferns (S5) der entschachtelten Daten zur späteren Verarbeitung enthält.

3. Übertragungsverfahren nach Anspruch 1 oder 2, wobei der Schritt zur Erkennung, ob die Daten kohärent sind, eine Überprüfung von binären Steuerelementen mittels einer Vorwärtsfehlerkorrektur-Schaltung, "FEC-Decoder" genannt, enthält.

4. Übertragungsverfahren nach Anspruch 1 oder 2, wobei der Schritt zur Erkennung, ob die Daten kohärent sind, ein Lesen einer Datenrahmen-Steuerkopfzeile und eine Bestimmung einer Prüfsumme des Typs CRC enthält.

5. Übertragungsverfahren nach einem der vorhergehenden Ansprüche, wobei die spätere Verarbeitung ein Lesen eines Rahmens von MAC-Schicht-Daten ist, die gemäß der Richtlinie ITU-T G9903 formatiert sind.

6. Verfahren nach einem der vorhergehenden Ansprüche, wobei die Filterschaltungen Filter (F1, F2) vorzugsweise zweiter Ordnung enthalten, die eine Trennung von Daten durchführen, die in getrennten Frequenzbändern der Gruppe Frequenzband CENELEC A, Frequenzband CENELEC B, und Frequenzband FCC oder Frequenzband ARIB übertragen werden.

7. Knotenvorrichtung (133), "erste Knotenvorrichtung" genannt, in einem Powerline-Kommunikationsnetz (120), wobei die erste Knotenvorrichtung (133) konfiguriert ist, um in einem oder mehreren getrennten Frequenzbändern mit einer zweiten Knotenvorrichtung (134) des Netzes (120) zu kommunizieren, wobei die erste Knotenvorrichtung (133) außerdem konfiguriert ist, um einen Empfangsmodus von Daten parallel in einem oder mehreren der getrennten Frequenzbänder anzuwenden, wobei die erste Knotenvorrichtung Elektronikschaltungen enthält, die konfiguriert sind, um:
- die in Form eines analogen Signals in einem oder mehreren der getrennten Frequenzbänder empfangenen Daten in eine erste Reihe von Daten umzuwandeln,
- die erste Reihe von Daten durch ebenso viele Filterschaltungen wie Frequenzbänder parallel zu filtern, für die die erste Knotenvorrichtung empfangsseitig konfiguriert ist, um ebenso viele zweite Reihen von Daten wie Frequenzbänder zu erhalten, für die die erste Knotenvorrichtung (133) empfangsseitig konfiguriert ist,
- die zweiten Reihen von Daten durch ebenso viele Demodulationsschaltungen wie Frequenzbänder zu demodulieren, für die die erste Knotenvorrichtung (133) empfangsseitig konfiguriert ist, um dritte Reihen von Daten zu erhalten, und
- die dritten Reihen von Daten in einem ersten Pufferspeicher (MEM1 27) zu speichern, und
wobei die erste Knotenvorrichtung (133) **dadurch gekennzeichnet ist, dass** sie Elektronikschaltungen enthält, die konfiguriert sind, um:
- Daten für jedes der getrennten Frequenzbänder gemäß einem Entschachtelungsmodus (DE2) zu entschachteln (S3), der dem getrennten Frequenzband eigen ist, für das die Entschachtelung durchgeführt wird, und wenn die entschachtelten Daten kohärent sind (S4), die entschachtelten Daten für eine spätere Verarbeitung zu liefern (S5).

8. Knotenvorrichtung nach dem vorhergehenden Anspruch, die konfiguriert ist, um einen Empfangsmodus von Daten in einem "erweitertes Frequenzband" genannten Frequenzband durchzuführen, das mindestens zwei Frequenzbänder unter der Vielzahl von getrennten Frequenzbändern enthält, wobei der Empfang im erweiterten Frequenzband in den mindestens zwei getrennten Frequenzbändern parallel erfolgt, die außerdem Elektronikschaltungen enthält, die konfiguriert sind, um:
- im ersten Pufferspeicher (MEM1 27) gelesene Daten gemäß einem Entschachtelungsmodus (DE1) zu entschachteln (S1), der einem Empfang im erweiterten Frequenzband eigen ist, und zu erkennen (S2), ob die entschachtelten Daten kohärent sind, und
- wenn die gemäß einem dem erweiterten Frequenzband eigenen Entschachtelungsmodus (DE1) entschachtelten Daten kohärent sind, die entschachtelten Daten für eine spätere Verarbeitung zu liefern (S5).

9. Powerline-Kommunikationsnetz (120), das eine Vielzahl von Knotenvorrichtungen (130, 131, 132, 133, 134, 135, 136, 137, 138, 139) nach dem vorhergehenden Anspruch enthält.

10. Computerprogrammprodukt, **dadurch gekennzeichnet, dass** es Programmcodeanweisungen zur Ausführung der Schritte des Verfahrens nach einem der Ansprüche 1 bis 6 enthält, wenn das Programm von einem Prozessor ausgeführt wird.

11. Informationsspeicherträger, der ein Computerprogrammprodukt nach dem vorhergehenden Anspruch enthält.

## Claims

1. Transmission method in a first node device (133) of a power line communication network (120), the first node device (133) being configured so as to apply a reception mode for receiving data transmitted by a second node device (134) in one or more separate frequency bands in parallel, comprising steps of:
- converting data received in the form of an analogue signal in one or more of said separate frequency bands into a first series of data,
- filtering said first series of data in parallel through the same number of filtering circuits as there are frequency bands for which the first node device is configured in reception mode, so as to obtain the same number of second series of data as there are frequency bands for which the first node device (133) is configured in reception mode,
- demodulating said second series of data through the same number of demodulation circuits as there are frequency bands for which the first node device (133) is configured in reception mode, so as to obtain third series of data, and
- recording the third series of data in a first buffer memory (MEM1 27),
the method being **characterized in that** it furthermore comprises steps of:
- de-interleaving (S3) data, for each of the separate frequency bands, in a de-interleaving mode (DE2) specific to the separate frequency band for which the de-interleaving is performed, detecting whether the de-interleaved data are coherent and, if the de-interleaved data are coherent (S4), supplying (S5) the de-interleaved data with a view to subsequent processing.

2. Transmission method according to the preceding claim, wherein the first node device (133) is furthermore configured so as to apply a reception mode for receiving data transmitted by a second node device (134) in a frequency band called "extended frequency band" comprising at least two separate frequency bands, reception in said extended frequency band taking place in parallel in the at least two separate frequency bands, the method furthermore comprising steps of de-interleaving (S1) the data read from said first buffer memory (MEM1 27) in a de-interleaving mode (DE1) specific to reception in an extended frequency band, detecting (S2) whether the de-interleaved data are coherent and, if the data de-interleaved in a de-interleaving mode (DE1) specific to the extended frequency band are coherent, supplying (S5) the de-interleaved data with a view to subsequent processing.

3. Transmission method according to Claim 1 or 2, wherein the step of detecting whether the data are coherent comprises checking control bits by way of a direct error correction circuit called "FEC decoder".

4. Transmission method according to Claim 1 or 2, wherein the step of detecting whether the data are coherent comprises reading a data frame control header and determining a checksum of CRC type.

5. Transmission method according to one of the preceding claims, wherein the subsequent processing is a read operation on a MAC layer data frame formatted in accordance with the ITU-T G9903 recommendation.

6. Method according to any one of the preceding claims, wherein the filtering circuits comprise preferably second-order filters (F1, F2) that separate data respectively transmitted in separate frequency bands from among the following group: CENELEC A frequency band, CENELEC B frequency band, and FCC frequency band or ARIB frequency band.

7. Node device (133) called "first node device" in a power line communication network (120), the first node device (133) being configured so as to communicate in one or more separate frequency bands with a second node device (134) of said network (120), the first node device (133) being furthermore configured so as to apply a reception mode for receiving data in one or more of said separate frequency bands in parallel, and the first node device comprising electronic circuits configured so as to:
- convert the data received in the form of an analogue signal in one or more of said separate frequency bands into a first series of data,
- filter said first series of data in parallel through the same number of filtering circuits as there are frequency bands for which the first node device is configured in reception mode, so as to obtain the same number of second series of data as there are frequency bands for which the first node device (133) is configured in reception mode,
- demodulate said second series of data through the same number of demodulation circuits as there are frequency bands for which the first node device (133) is configured in reception mode, so as to obtain third series of data,
- record the third series of data in a first buffer memory (MEM1 27), and,
the first node device (133) being **characterized in that** it comprises electronic circuits configured so as to:
- de-interleave (S3) data, for each of the separate frequency bands, in a de-interleaving mode (DE2) specific to the separate frequency band for which the de-interleaving is performed and, if the de-interleaved data are coherent (S4), supply (S5) the de-interleaved data with a view to subsequent processing.

8. Node device according to the preceding claim, configured so as to apply a reception mode for receiving data in a frequency band called "extended frequency band" comprising at least two separate frequency bands from among said plurality of separate frequency bands, reception in said extended frequency band taking place in parallel in the at least two separate frequency bands, furthermore comprising electronic circuits configured so as to:
- de-interleave (S1) data read from said first buffer memory (MEM1 27) in a de-interleaving mode (DE1) specific to reception in an extended frequency band and detect (S2) whether the de-interleaved data are coherent and,
- if the data de-interleaved in a de-interleaving mode (DE1) specific to the extended frequency band are coherent, supply (S5) the de-interleaved data with a view to subsequent processing.

9. Power line communication network (120) comprising a plurality of node devices (130, 131, 132, 133, 134, 135, 136, 137, 138, 139) according to the preceding claim.

10. Computer program product, **characterized in that** it comprises program code instructions for executing the steps of the method according to any one of Claims 1 to 6 when said program is executed by a processor.

11. Information storage medium comprising a computer program product according to the preceding claim.
